# EUROPEAN PATENT APPLICATION

(11) **EP 1 775 959 A2**
(43) Date of publication of application: **18.04.2007**
(21) Application number: 06012743.8
(22) Date of filing: 21.06.2006
(51) Int. Cl.: H04N 7/26, H04N 7/50, H04N 7/01, H04N 5/00

(54) **Video processing system with simultaneous multiple outputs each with unique formats**

(30) Priority: 11.10.2005 US 247464
(71) Applicant: Broadcom Corporation, Irvine, CA 92618-7013 (US)
(72) Inventor: Bennett, James D., San Clemente CA 92672 (US); Karaoguz, Jeyhan, Irvine CA 92606 (US)
(74) Representative: Jehle, Volker Armin

(57) **Abstract**

A video processing system receives a plurality of video inputs and specifically tailors them to meet the audio/video format requirements of a plurality of recipient video devices. The video processing system may be incorporated into a set top box, personal video recorder, video player, television, or video equipment. The video processing system in the set top box allows multiple users to receive video programs or television broadcasts meeting the audio/video format requirements of the recipient devices of the users. The video processing system allows user to define the audio/video formats of the recipient devices. Alternatively, the video processing system queries the recipient devices and obtains the audio/video format requirements of the video devices. The video processing system delivers multiple audio/video outputs, reformatted from a plurality of audio/video sources on the basis of user input, wirelessly in the operational region or by a wired means to a number of video devices. The processing itself involves transcoding the analog or digital input signals to produce analog and digital output video formats as needed.

## Description

### CROSS REFERENCES TO PRIORITY APPLICATIONS

1. This application is a continuation in part of U.S. Utility Patent Application No. 10/675,377, filed September 30, 2003, which claims priority to and claims the benefit of: U.S. Provisional Patent Application Serial No. 60/467,990, filed May 5, 2003; U.S. Provisional Patent Application Serial No. 60/443,897, filed January 30, 2003; U.S. Provisional Patent Application Serial No. 60/444,099, filed January 30, 2003; U.S. Provisional Patent Application Serial No. 60/443,996, filed January 30, 2003; U.S. Provisional Patent Application Serial No. 60/444,243, filed January 30, 2003; U.S. Provisional Patent Application Serial No. 60/464,711, filed April 23, 2003; U.S. Provisional Patent Application Serial No. 60/457,179, filed March 25, 2003; U.S. Provisional Patent Application Serial No. 60/467,867, filed May 5, 2003; U.S. Provisional Patent Application Serial No. 60/432,472, filed December 11, 2002; and U.S. Provisional Patent Application Serial No. 60/443,894, filed January 30, 2003, all of which are incorporated herein by reference for all purposes.
2. This application is a continuation in part of U.S. Utility Patent Application No. 10/675,903, filed September 30, 2003, which claims priority to and claims the benefit of U.S. Provisional Patent Application Serial No. 60/478,528 filed June 13, 2003; U.S. Provisional Patent Application Serial No. 60/444,243, filed January 30, 2003; U.S. Provisional Patent Application Serial No. 60/443,897, filed January 30, 2003; U.S. Provisional Patent Application Serial No. 60/444,099, filed January 30, 2003; U.S. Provisional Patent Application Serial No. 60/443,996, filed January 30, 2003; U.S. Provisional Patent Application Serial No. 60/444,243, filed January 30, 2003; U.S. Provisional Patent Application Serial No. 60/464,711, filed April 23, 2003; U.S. Provisional Patent Application Serial No. 60/457,179, filed March 25, 2003; U.S. Provisional Patent Application Serial No. 60/467,867, filed May 5, 2003; U.S. Provisional Patent Application Serial No. 60/432,472, filed December 11, 2002; and U.S. Provisional Patent Application Serial No. 60/443,894, filed January 30, 2003; all of which are incorporated herein by reference for all purposes.
3. This application is a continuation in part of U.S. Utility Patent Application No. 10/675,110, filed September 30, 2003, which claims priority to and claims the benefit of: U.S. Provisional Patent Application Serial No. 60/444,243, filed January 30, 2003; U.S. Provisional Patent Application Serial No. 60/443,897, filed January 30, 2003; U.S. Provisional Patent Application Serial No. 60/444,099, filed January 30, 2003; U.S. Provisional Patent Application Serial No. 60/443,996, filed January 30, 2003; U.S. Provisional Patent Application Serial No. 60/467,990, filed May 5, 2003; U.S. Provisional Patent Application Serial No. 60/464,711, filed April 23, 2003; U.S. Provisional Patent Application Serial No. 60/457,179, filed March 25, 2003; U.S. Provisional Patent Application Serial No. 60/467,867, filed May 5, 2003; U.S. Provisional Patent Application Serial No. 60/432,472, filed December 11, 2002; and U.S. Provisional Patent Application Serial No. 60/470,960, filed May 15, 2003; and U.S. Provisional Patent Application Serial No. 60/443,894, filed January 30, 2003; all of which are incorporated herein by reference for all purposes.

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

**1. Field of the Invention**

This invention generally relates to video systems; and, more specifically, to video processing systems that generate output video according to proprietary and industry standards.

**2. Related Art**

Video systems are in wide spread use. These video systems include a video display and a corresponding sound system. Typical video systems include analog and digital televisions, computers, pocket televisions, cell phones, PDAs (Personal Digital Assistants), projectors, PSPs (Portable Play Stations), and digital watches. Such video systems use a wide variety of industry standard video and audio formats such as NTSC (National Television Systems Committee), PAL (Phase Alternation Line), VGA (Video Graphics Array), QVGA (Quadrature Video Graphics Array) and HDTV (High Definition TeleVision). Other video systems employ unique, proprietary video format requirements, for example, some video systems such as a PDA may have a screen resolution, refresh, frame rates, encoding, and compression that differ from the industry standard formats mentioned above.

Video sources for such systems include cable and satellite Set-Top-Boxes (STBs), Digital Video Disk (DVD) players, Personal Video Recorders (PVRs), computers, wireless broadcast television, etc. The video sources provide a wide variety of programming, both live and pre-recorded, that may be presented to a viewer via the video system.

Video systems are used by a variety of people in environments such as offices, schools (educational institutions) or homes. Typical video system environment at schools may include different students having their own video systems and wishing to view their own programs at their own convenience. Similarly, typical home video environment consists of many different members of the family that have competing desires to view their own program selections at their personal convenience of time and location using a selected video source.

Further limitations and disadvantages of conventional and traditional approaches will become apparent to one of ordinary skill in the art through comparison of such systems with the present invention.

### BRIEF SUMMARY OF THE INVENTION

The present invention is directed to apparatus and methods of operation that are further described in the following Brief Description of the Drawings, the Detailed Description of the Invention, and the Claims.

In accordance with the present invention, a video processing system (VPS) that receives an input video signal having certain video characteristics and produces a plurality of output video signals having video characteristics suitable for each of plurality of video devices. The VPS consists of a video input circuitry that receives the input video signal, an interface control circuitry that receives video format information regarding a plurality of video devices that communicatively couple to the video processing system. Further, the VPS consists of a video transcoder circuitry operable to transcode the input video signal based upon the video format information to produce the plurality of output video signals, each output video signal having a respective video format and corresponding to at least one respective video device of the plurality of video devices and a video output circuitry operable to communicatively output the plurality of output video signals to the plurality of video devices. The audio portion of the VPS consists of an audio input circuitry operable to receive an input audio signal corresponding to the input video signal, an audio transcoder circuitry operable to transcode the input audio signal based upon audio format information regarding the plurality of video devices to produce a plurality of output audio signals, each output audio signal having a respective audio format and corresponding to at least one respective video device of the plurality of video devices and an audio output circuitry operable to communicatively output the plurality of output audio signals to the plurality of video devices. The interface control circuitry of the VPS is capable of querying all video devices within an operational range to elicit the video format information regarding the video devices.

The video format information mentioned above includes screen resolution information and screen refresh rate information. The output video format of the VPS is one of QVGA (Quadrature Video Graphics Array), HDTV (High Definition TeleVision), 3D (3 dimension) standards, analog standards or any other unique video formats. The video processing system also delivers an output with input video characteristics to an external storage device.

According to the present invention, a set top box (STB) that is capable of transcoding video signals to produce a plurality of output video signals based upon an input video signal. The STB consists of a video input circuitry that receives a source signal, a video tuner operable to process the source signal to produce an input video signal having an input video format, an interface control circuitry that receives video format information regarding a plurality of video devices that communicatively couple to the video processing system, a video transcoder circuitry operable to transcode the input video signal based upon the video format information to produce the plurality of output video signals, each output video signal having a respective video format and corresponding to at least one respective video device of the plurality of video devices and a video output circuitry operable to communicatively output the plurality of output video signals to the plurality of video devices.
According to an aspect of the invention, a video processing system operable to receive an input video signal having input video characteristics and to produce a plurality of output video signals is provided, the video processing system comprising:
video input circuitry operable to receive the input video signal;
interface control circuitry operable to receive video format information regarding a plurality of video devices that communicatively couple to the video processing system;
video transcoder circuitry operable to transcode the input video signal based upon the video format information to produce the plurality of output video signals, each output video signal having a respective video format and corresponding to at least one respective video device of the plurality of video devices; and
video output circuitry operable to communicatively output the plurality of output video signals to the plurality of video devices.
Advantageously, the video processing system further comprises:
audio input circuitry operable to receive an input audio signal corresponding to the input video signal;
audio transcoder circuitry operable to transcode the input audio signal based upon audio format information regarding the plurality of video devices to produce a plurality of output audio signals, each output audio signal having a respective audio format and corresponding to at least one respective video device of the plurality of video devices; and
audio output circuitry operable to communicatively output the plurality of output audio signals to the plurality of video devices.
Advantageously, the video output circuitry comprises at least one of a digital wired interface, an analog wired interface, a digital wireless interface, and an analog wireless interface.
Advantageously, the video output circuitry further operable to deliver the input video signal having the input video characteristics to an additional video device.
Advantageously, the additional video device is a video storage device.
Advantageously, the video format information including screen resolution information and screen refresh rate information.
Advantageously, the interface control circuitry further operable to query all video devices within an operational range to elicit the video format information regarding the video devices.
Advantageously, the video transcoder circuitry operable to decimate the input video signal to produce one of the output video signals, the output video signal having lesser resolution than the input video signal.
Advantageously, the video transcoder circuitry operable to interpolate the input video signal to produce one of the output video signals, the output video signal having greater resolution than the input video signal.
Advantageously, at least one of the output video signals complies with the QVGA (Quadrature Video Graphics Array) operating standard.
Advantageously, the input video characteristics comply with a three dimensional television standard.
Advantageously, the input video characteristics comply with at least one version of the High Definition TeleVision operating standards.
Advantageously:
the input video signal comprises a digital video signal; and
at least one of the output video signals comprises a digital video signal.
Advantageously:
the input video signal comprises a digital video signal; and
at least one of the output video signals comprises an analog video signal.
Advantageously, the video transcoder circuitry is contained within at least two distinct video devices, including at least a video source device, and a video processing device.
Advantageously, the output video signal includes a plurality of channels of programming.
According to an aspect of the invention, a set top box is provided that is operable to transcode video signals to produce a plurality of output video signals based upon an input video signal, the set top box comprising:
video input circuitry operable to receive a source signal;
a video tuner operable to process the source signal to produce an input video signal having an input video format;
interface control circuitry operable to receive video format information regarding a plurality of video devices that communicatively couple to the video processing system;
video transcoder circuitry operable to transcode the input video signal based upon the video format information to produce the plurality of output video signals, each output video signal having a respective video format and corresponding to at least one respective video device of the plurality of video devices; and
video output circuitry operable to communicatively output the plurality of output video signals to the plurality of video devices.
Advantageously, the set top box further comprises:
an audio tuner operable to receive an input audio signal corresponding to the input video signal;
audio transcoder circuitry operable to transcode the input audio signal based upon audio format information regarding the plurality of video devices to produce a plurality of output audio signals, each output audio signal having a respective audio format and corresponding to at least one respective video device of the plurality of video devices; and
audio output circuitry operable to communicatively output the plurality of output audio signals to the plurality of video devices.
Advantageously, the video output circuitry comprises at least one of a digital wired interface, an analog wired interface, a digital wireless interface, and an analog wireless interface.
Advantageously, the set top box further comprises a storage interface operable to cause storage of the input video signal.
Advantageously, the video format information including screen resolution information and screen refresh rate information.
Advantageously:
the input video signal comprises a digital video signal; and
at least one of the output video signals comprises a digital video signal.
Advantageously:
the input video signal comprises a digital video signal; and
at least one of the output video signals comprises an analog video signal.
According to an aspect of the invention, a method for processing audio/video information is provided comprising:
receiving an audio/video signal;
segregating the audio/video signal into a audio signal and a video signal;
transcoding the video signal to produce a transcoded video signal output;
transcoding the audio signal to produce a transcoded audio signal; and
communicating the transcoded audio/video signals to a recipient display system.
Advantageously:
transcoding the video signal to produce a transcoded video signal includes translating the video signal to a user defined screen resolution, user defined refresh and frame rate; and
transcoding the audio signal to produce a transcoded audio signal output includes translating the audio signal to one of user defined mono, stereo or surround sound signals.
Advantageously, communicating of the transcoded audio/video signals to a recipient display system comprises transmitting the transcoded audio/video signals to a receiving system wirelessly.

Features and advantages of the present invention will become apparent from the following detailed description of the invention made with reference to the accompanying drawings.

### BRIEF DESCRIPTION OF THE DRAWINGS

**FIG. 1** is a block diagram illustrating an embodiment of a video processing system (VPS) according to the present invention that is incorporated into some of the video processing and/or displaying systems;

**FIG. 2** is a block diagram illustrating an embodiment of a video processing system (VPS) in which the video processing is done in more than one video processing and/or displaying systems, in accordance with the present invention;

**FIG. 3** is a block diagram illustrating the functional details of the video processing portion of a video processing system (VPS);

**FIG. 4** is a block diagram illustrating the functional details of the audio component of a video processing system (VPS);

**FIG. 5** is a block diagram illustrating the circuitry involved in the video processing portion of a set top box (STB) that incorporates video processing system (VPS);

**FIG. 6** is a block diagram illustrating the circuitry involved in the audio component of a set top box (STB) that incorporates video processing system (VPS);

**FIG. 7** is a flow diagram illustrating the method involved in video processing system (VPS) receiving audio/video content, separately transcoding audio and video contents based upon the format specifications of the recipient display system, according to the present invention; and

**FIG. 8** is a flow chart illustrating the method used in downloading the pre-recorded audio/video program on a pay-per-view basis.

### DETAILED DESCRIPTION OF THE INVENTION

The present invention relates generally to video systems and the following description involves the application of the present invention to a video system. Although the following description relates in particular to the application of the present invention to a home video system, it should be clear that the teachings of the present invention might be applied to other types of video systems and to audio systems alone.

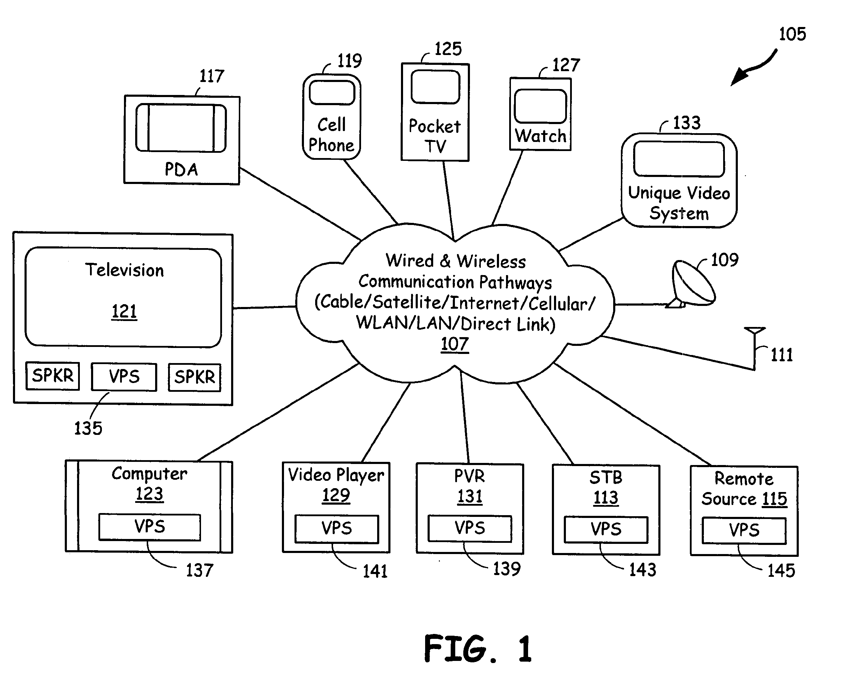

**FIG. 1** is a block diagram 105 illustrating an exemplary video network wherein video processing functionality in accordance with the present invention is incorporated therein. More specifically, in a video network 105, each of a plurality of video sources simultaneously delivers video programs to a plurality of video systems having differing audio and video format requirements. The plurality of video sources include a video player 129, STB (Set Top Box) 113, remote source 115, television 121, personal computer 123 and PVR (Personal Video Recorder) 131. The plurality of video systems, i.e., a PDA (Personal Digital Assistant) 117, cell phone 119, pocket TV 125, wrist watch 127, the personal computer 123, the television 121 and other unique video system 133, each have displays and speakers. Because they both source video and display sourced video, the television 121 and personal computer 123 fall within both categories.

The unique video system 133 represents other types of video systems having unique video formats. For example, the unique video system 133 might be a digital video projector, personal video device, or portable game unit. The remote source 115 represents many types of remote video sources such as Internet based video servers, cable and satellite service providers, television stations, etc., which are typically at locations outside away from the primary viewing area such as a home.

To support simultaneous delivery of a video/audio program to pluralities of the video systems 117, 119, 121, 123, 125, 127, and 133, each of the video sources 113, 115, 121, 123, 129, and 131 are configured with a VPS (Video Processing System). Specifically, VPSs 143, 145, 135, 137, 141 and 139, respectively, are incorporated therein. Each VPS generates multiple video and audio formats from video programs in one or more other formats. Typically, each VPS will have access to a video program in a first format, and, using the first format, creates at least one other version of the video program in a second format. This creation process typically takes place in real time, but may also occur in the background. Each VPS delivers the plurality of formats of the video program to the plurality of video systems for display.

The VPSs 143, 145, 135, 137, 141, and 139 also deliver other video programs in required pluralities of formats to the video systems 117, 119, 121, 123, 125, 127 and 133.
For example, the PDA 117 and television 121 might both interact with the STB 113 to select a first, single format broadcast television channel received from the remote source 115 via a satellite dish 109, roof top antenna 111, or cable infrastructure. At the same time, the pocket TV 125 might request a second television channel via the same pathway. In response, the VPS 143 simultaneously: a) delivers the first television channel video in its original format to the television 121; b) creates and delivers the video from the first television channel in a second format tailored for the PDA 117; and c) creates and delivers the video from the second television channel in a third format for the pocket TV 125.

In another exemplary mode of operation, instead of using its own VPS, the VPS 139, the PVR 131 may use the VPS of any other video source. For example, the PVR 131 delivers stored video to the STB 113. Upon receipt, the STB 113 employs the VPS 143 to produce the several formats required or requested by those of the plurality of video systems that desire to view such video. Of course, the PVR 131 might also be incorporated within the STB 113 and share a single VPS. Similarly, the television 121, video player 129, and personal computer 123 might also employ the VPS of the STB 113 whenever desired or if such video sources do not have a VPS installed. More generally, although their own VPS may be used, any video source may use the VPS of any other video source as selected or configured by the user or as necessary when a video source has no VPS.

Communication pathways 107 support all communication exchanges between the various elements of Figure 1. For example, the remote source 115 delivers broadcast television channel in at least one format via the communication pathways 107. When the remote source 115 comprises a cable service provider, the communication pathways 107 comprises a coaxial cable infrastructure that communicatively couples the remote source 115 with any or all of the other video sources, e.g., the video sources 113, 121, 123, 129 and 131. Similarly, to support fiber, satellite or roof top antenna television broadcasts, the communication pathways 107 comprise a fiber and wireless infrastructure. The communication pathways 107 also comprise wired and wireless, short and long-range links and networks, as well as any combinations thereof between any two of the illustrated elements.

Although each of the VPSs 135, 137, 139, 141, 143 and 145 are fully functional via circuitry and processing operations, full VPS functionality might also be distributed in portions across two or more of the components 135, 137, 139, 141, and 143. Similarly, some or all of the VPSs 135, 137, 139, 141, 143 and 145 might only operate on a reduced set of video formats and produce a limited set of output video formats. If such is the case and either the input video format or the required output format is not supported, the input video will be routed to another of the VPSs 135, 137, 139, 141, 143 and 145 for processing. For example, the VPS 141 of the video player 129 might receive video having an NTSC (National Television System Committee) format with associated audio in a Dolby 5.1 surround sound format from a Digital Video Disk (DVD). The VPS 141 converts the received formats into a QVGA (Quadrature Video Graphics Array) video format and MPEG-1 (Moving Pictures Expert Group) audio format. Although such audio and video industry standard formats might be acceptable for wireless delivery to the PDA 117 for playback, a video system such as the cell phone 119 might require proprietary formats. In such case, the video player 129 routes the QVGA and MPEG-1 formats to another VPS that is configured to handle such proprietary formats before finally delivering them to the cell phone 119 for consumption. Likewise, audio and video could take different formatting pathways to get to the video system. The video might pass from a first video source to a second for a first stage translation, and then to a second video source for final translation before final deliver to the consuming video system. At the same time, the audio might be translated at the first video source and delivered directly to the consuming video system. Alternatively, instead of direct delivery, the translated audio might be relayed along with the video through the second video source to the consuming video system.

Although not shown, a separate piece of VPS equipment might provide dedicated and centralized VPS support for the video network 105. That is, the VPS 135, 137, 139, 141, and 143 is either integrated into the video system with rest of the functional circuitry of the video systems, or housed independently before video system's input circuitry. Such equipment might comprise a dedicated computer server located in proximity of the video systems or might be available remotely, e.g., on the Internet.

Some of the video systems 117, 119, 121, 123, 125, 127 and 133 may not have any of the VPS functionality, but receive processed video content uniquely suited for the respective video system via the VPS 143 in the STB 113. Similarly, the video sources 131 and 129 may not have any VPS functionality, but source a standard video program to the VPS 143 in the STB 113. In summary, the video processing itself may be done exclusively in the VPS 143 of the STB 133, and the processed video and audio formats communicated to the video systems 113, 117, 119, 121, 123, 125, 127, and 133. Another possibility is that of video processing done upstream at the video source 115, by the VPS 145, and delivered to the STB 113 in a format desired required or selected for the consuming video system.

Devices which operate as both video sources and video systems, e.g., the television 121 and personal computer 123, receives video and audio in either acceptable or unacceptable formats for consumption on its screen and speakers. If unacceptable, the incorporated VPS creates the acceptable format. In addition, the VPS of such devices may also service other video systems by further creating appropriate audio and video formats as needed for such other consuming video systems.

In one embodiment, the processing performed by the VPS 135, 137, 139, 141 and 143 includes any necessary decryption, decompression and digital rights processing of the video and audio before transcoding from the current audio and video formats to that required or selected for the particular ones of the video systems 117, 119, 121, 123, 125, 127 and 133 that will be consuming the video (i.e., displaying on a screen) and audio (i.e., playing back on one or more speakers). The VPS applies any necessary encryption, compression and digital rights processing to the transcoded audio and video before delivery to the one or more consuming video systems via wireless or wired communication links of the communication pathways 107. The audio and/or video signals received by any VPS can also be directly delivered without processing to any consuming video system or other video source.

Any of the VPSs 135, 137, 139, 141 and 143 can simultaneously support two or more of the video sources systems 117, 119, 121, 123, 125, 127, and 133 using the same or different video input. For example, the VPS 139 might simultaneously: a) retrieve first and second video programs in first format (i.e., first audio format and first video format); b) convert the first video program to second and a third format; c) convert the second video program to a fourth format; d) deliver the first format to the television 121; e) deliver the second format to the cell phone 119; f) deliver the third format to the PDA 117; g) deliver the fourth format to both the pocket TV 125 and wrist watch 127.

The VPSs 135, 137, 139, 141 and 143 receive audio and video format information from each of the video systems 117, 119, 121, 123, 125, 127, 131 and 133. Such format information includes all of the supported formats and those preferred or currently desired by a viewer/listener. Each of the VPSs exchanges information regarding its conversion capabilities with the others of the VPSs 135, 137, 139, 141 and 143. Each also exchanges information regarding their own and other of the VPSs conversion capabilities with the video systems 117, 119, 121, 123, 125, 127, 131 and 133. Through all of this sharing of format consumption capabilities/desires and conversion capabilities, an appropriate one or more of the VPS are automatically selected and delivery begins. Of course, a viewer/listener may also interact manually to choose an audio/video program and then select one or more of the VPSs to process and deliver audio and video in selected formats. Such manual interaction may be performed each time a program is selected, or as part of a setup procedure. The manual interaction is typically performed by the viewer/listener directly via a user interface of the video system on which the one or future programs from a particular source will be delivered. Such interaction may also be performed via any user interface of any of the illustrated elements. For example, to set up the cell phone 119, a user interface on the cell phone 199, personal computer 123 or STB 113 might be used.

The video format information includes specifications of screen resolution, frame and refresh rate information, and possibly compression, digital rights requirements and encryption approaches. The audio format specification may include the specifications of one of mono, stereo or surround sound signals, and possibly include particular compression, digital rights, and encryption schemes. These formats may be defined by industry standards or proprietary standards.

Among the signals received by the VPS 143 include an analog NTSC (National Television Systems Committee) television signal, an analog PAL (Phase Alternation Line) television signal, a downloaded MPEG (Moving Picture Experts Group) file, a HDTV broadcast signal or any other standard digital broadcast signal. In case where there is a need for a signal of lesser resolution than the input digital signal, the VPS 143 decimates the input video signal to produce output signal of lesser resolution. Alternatively, if a signal of higher resolution is needed at one of the outputs of the VPS 143, the VPS 143 interpolates the input video signal to produce a signal of higher resolution. Among the output video signal formats of the VPS 143 include an analog NTSC television signal, an analog PAL (Phase Alternation Line) television signal, QVGA, HDTV (High Definition TeleVision) and three-dimensional video standard. The VPS 143 also outputs any other user defined video formats, by specifying screen resolution, frame and refresh rates, irrespective of the input video format. The VPS 143 processes any input signal of analog formats by initially converting it to a digital video signal and later transcoding it to the required video format.

For example, the video source 115 may be an Internet based vendor or a cable/satellite based signal provider. For an Internet based vendor, authentication may be required to view video program on a pay-per-view basis or to purchase the video program directly. The video program may be a movie, a sports related program, a cable based educational program, or television broadcast program.

The video signals received by the VPS 143 of the STB 113 may be an analog video signal with mono or stereo audio content or a may be a digital audio/video signal with HDTV (High Definition Television) format and a surround sound audio format. Each of the recipient devices 117, 119, 121, 123, 125, 127, 131 and 133 has unique audio and video formats. The recipient device such as a HDTV 121 receives video signals from STB 113 after transcoding the received video signals. For example, the video systems such as the pocket television 125, the watch with video functionality 127, the cell phone with video functionality 119, the PDA with video functionality 117 or the PSP 133 may have a QVGA (Qudrature Video Graphics Array) display systems. The QVGA video format has a screen resolution of 320 X 240 and frame rate of 30 fps (frames per second) and stereo audio output. Some of the plurality of outputs of the VPS 143 provides unique audio and video outputs that match the format of the respective video systems 125, 127, 119 and 117 wirelessly without wasting any bandwidth. The video systems 125, 127, 119 and 117 may not need to transcode the received video signals from the VPS 143 again.

In one embodiment of the present invention, the VPS 135, 137, 139, 141 and 143 have options to receive plurality video programs or television channels and process them to produce multiple output channels. The VPS 143 in the STB 113 has the capability to address multiple inputs and provide multiple outputs each with unique audio/video format and wirelessly transmit these multiple audio/video outputs in the operational region (such as a home or an office), in any combination of input-output channels and the audio/video output format as programmed by the user. This capability of the VPS 143 allows multiple users to enjoy the desired video programs anywhere in the house using any of the video systems 117, 119, 121, 123, 125, 127 or 133. In such a case, the STB 113 comes with multiple remote controls (not shown) for programming the combination of input-output channels of the STB 113 and the output audio and video format of the STB 113.

For example, using the VPS 143 it is possible for few members of a family to watch programs of one's own interest, at one's own convenience, anywhere in the house. The users may use one of the multiple remote controls and control the STB 113 to get any combination of input-output and output format to match the respective video device 117, 119, 121, 123, 125, 127 or 133. For instance, one user may wish to use input channel 1 of the STB 113 to receive the video program from an Internet based vendor and may program output channel 2 to wirelessly broadcast the program in a desired audio/video format in the operational region and watch the program in the backyard using a PDA 117 with video capability. Another user may wish to watch a favorite program from a television 121, in the kitchen, using input channel 4 of the STB 113 and may program the STB 113 to deliver analog video signal to the television 121 wirelessly using output channel 1. In each of these cases, a wireless adapter (not shown in **FIG. 1**) may have to be attached to the recipient device's audio/video input jacks to receive wireless transmission of the audio/video signals from the STB 113 and the recipient device have to placed within the operational range of the STB 113. Each of these users may change the source of any of the input channels of the STB 113 either using one of the remote controls or using the controls provided with in the STB 113 itself, at any time.

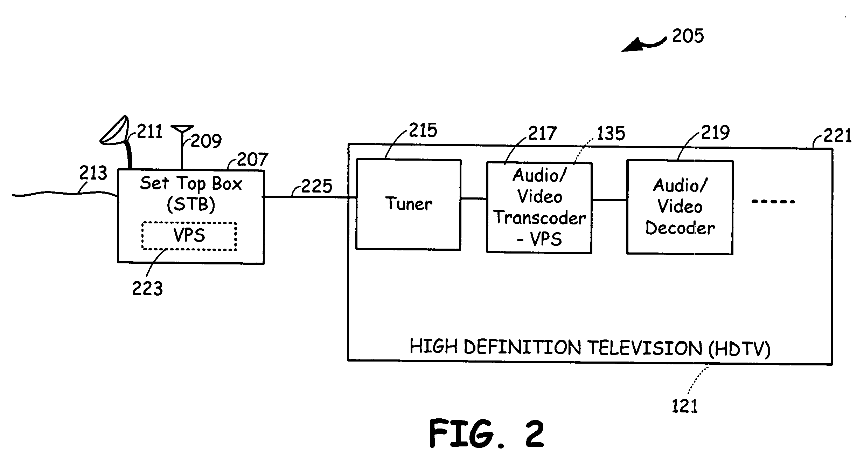

**FIG. 2** is a block diagram 205 illustrating an embodiment of a video processing system (VPS) in which the video processing is done in more than one video processing and/or displaying systems, in accordance with the present invention. The **FIG. 2** shows a VPS 223 and another VPS 217 (135 in **FIG. 1**) functioning together to achieve processing of the video signals received by the STB (Set Top Box) 207. The system comprises of a STB 207 providing partially processed video signals to a HDTV (High Definition TeleVision) 221 (121 in **FIG. 1**), considering a HDTV as an example. The STB 207 delivers VPS 223 processed video information received via any one or more of a WLAN, a LAN, a cable television network 213, a dish antenna 211, and another antenna 209. The input portion of the HDTV 221 (shown in **FIG. 2**) comprises of a tuner 215, a VPS (audio/video transcoder) 217, audio/video decoder 219 among other functional blocks (not shown) that usually exist in a HDTV. The STB 207 is communicatively coupled with the HDTV 221 via a cable 225 or via a wireless connection (not shown).

Video input to the VPS 223 is received from the STB 207, videodisk player (not shown), PVR (Personal Video Recorder - 131 in **FIG. 1**) and other local and remote sources. The remote sources include an Internet based vendor, a cable provider or a satellite based television signal provider. The input video signal to the VPS 223 may be an analog NTSC (National Television Systems Committee) television signal, an analog PAL (Phase Alternation Line) television signal, a downloaded MPEG (Moving Picture Experts Group) file, a HDTV broadcast signal or any other standard digital broadcast signal.

In one embodiment of the present invention, the VPS 223 converts incoming analog signal to a digital signal and transcodes it to a digital standard format. The transcoded digital signals are modulated on a carrier (on a broadcasting channel 3, for example) communicated to the HDTV via a cable 225.

When the tuner 215 of the HDTV 221 is tuned to the respective channel, the VPS 217 receives the transcoded digital signals. The VPS 217 of the HDTV 221 transcodes the received digital signals to a HDTV video format. Further, the VPS 217 translates the received audio signals to a surround sound signal that is compatible with the HDTV format. The HDTV format video signals from the VPS 217 are communicated to the audio/video decoder 219, which is a standard block of a typical HDTV. The audio/video decoder 219 together with rest of the functional blocks of a the HDTV 221 process further the HDTV signals from the VPS 217 and the video output is presented through a video display (not shown).

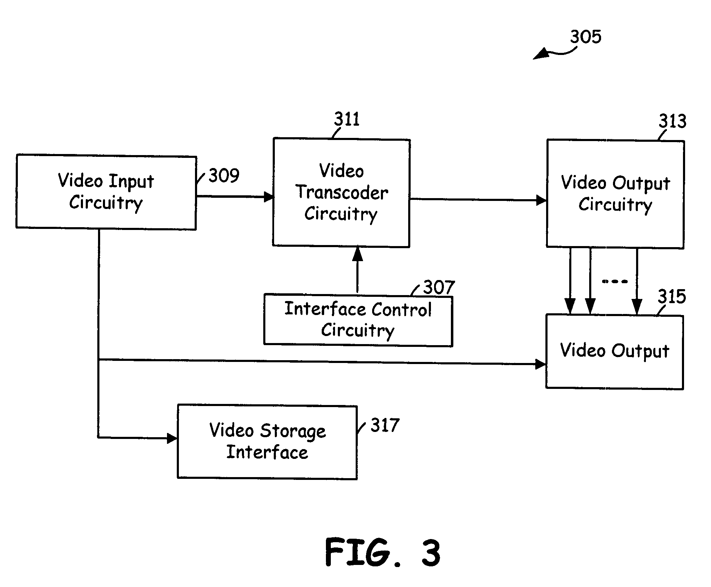

**FIG. 3** is a block diagram illustrating the functional details of the video processing portion of a video processing system (VPS), according to the present invention. A VPS 305 (some or all of elements shown within each of the VPS components 135, 137, 139, 141, and 143 of **FIG. 1**) comprises a video input circuitry 309, a video transcoder circuitry 311, an interface control circuitry 307, a video output circuitry 313, a video output 315 and a video storage interface 317.

Video input circuitry 309 receives video input signals from the STB 113, PVR 131, television 121, computer 123, an external video source 115 and other local and remote sources. If the video input received by the video input circuitry 309 is in an analog form, the analog to digital (A/D) converter (not shown) built into the video input circuitry 309 converts the video to a digital form. Irrespective of whether the transcoding is done upstream by the video source 115 or any other local and remote source, the video input is made available at the output in the received format as one of the outputs of the VPS 305, at the video output 315. In addition, the received input signal without any processing is made available as an output to a storage device for the purpose of permanent storage. The received input signal is made available for the storage device via a video storage interface 317.

The video transcoder circuitry 311 is a process intensive circuitry capable of decoding the incoming video signal received from the video input circuitry 309. Once the video information is decoded, the video transcoder circuitry 311 processes the video signal to encode again into a standard video format or a user defined video format. Further, the video transcoder circuitry 311 encodes the decoded video signals in to a plurality of video formats defined by the user. In effect, the video transcoder circuitry simultaneously translates input video signal into plurality of video formats, each format having unique screen resolution, frame and refresh rates. The video transcoder circuitry 311 decimates the input video signal when it is necessary to produce an output video signal having lesser resolution. When it is required to output a higher resolution video signal than that of input video signal, the video transcoder circuitry 311 interpolates the input video signals.

The interface control circuitry 307 acts as an interface between the VPS 135, 137, 139, 141, and 143 (of **FIG. 1**) and the user, specifically, the video transcoder circuitry 311 and the user. The user may program each transcoder channel of the video transcoder circuitry 311 by providing information about the screen resolution, frame and refresh rates and other information about the video devices 117, 119, 121, 123, 125, 127 or 133 (of FIG. 1). Alternatively, the interface control circuitry 307 is capable of querying all the video devices within the operational range and elicits the video format information regarding the video devices. To use this capability of the interface control circuitry 307, the video devices 117, 119, 121, 123, 125, 127 or 133 (of **FIG. 1**) required to be communicatively coupled to the interface control circuitry 307 and be able to provide video format information.

The video output circuitry 313 segregates the video signals received from the video transcoder circuitry 311 into plurality of simultaneous video output signals each with unique screen resolution, frame and refresh rates. If an analog video output is required, the video output circuitry 313 appropriately converts digital video signal to an analog signal of required format. The output signals are made available to the user via output jacks at video output 315. Alternatively, the video output circuitry 313 wirelessly transmits all of the output video signals to the recipient devices by modulating video outputs on a RF (Radio Frequency), in the operational region. The user may program the method by which each video signal output of the video output circuitry 313 is delivered to the respective video device, using the interface control circuitry 317.

For example, the video input to the video input circuitry 309 may be one of an analog NTSC television signal, an analog PAL television signal, a HDTV broadcast signal or any other standard digital broadcast signal. Among the plurality of output video formats into which the video transcoder circuitry 311 encodes include analog NTSC format, analog PAL format, HDTV format, QVGA format, 3D (Three Dimensional) video format and/or any other user defined format. If the recipient device is a PSP (Play Station Portable) which uses a QVGA video format, then one of the outputs of video output circuitry 313 may be programmed to transmit a QVGA format video signals wirelessly.

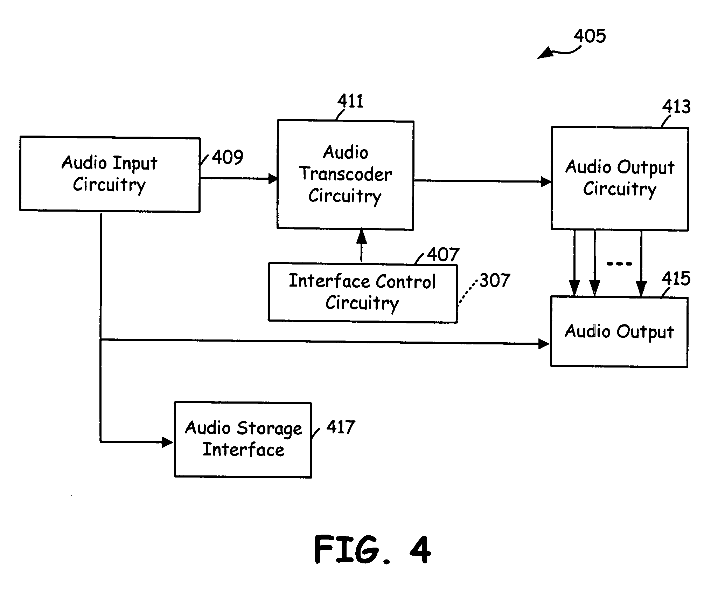

**FIG. 4** is a block diagram 405 illustrating the functional details of the audio component of a video processing system (VPS), according to the present invention. The entire VPS 135, 137, 139, 141, and 143 (of **FIG. 1**) circuitry comprises of the video component circuitry 305 shown in **FIG. 3** as well as the audio component circuitry 405 shown in **FIG. 4**. The audio component 405 of the VPS comprises of an audio input circuitry 409, an audio transcoder circuitry 411, an audio output circuitry 413, an interface control circuitry 407, an audio storage interface 417 and an audio output 417.

Audio input circuitry 409 receives audio input signals from the STB 113, PVR 131, television 121, computer 123, an external video source 115 and other local and remote sources. The audio portion of the audio/video signal from the STB 113, for example, is separately fed to the audio input circuitry 409 for further processing. The audio input circuitry 409 converts analog audio input signals, such as from a NTSC television signal, to digital audio signals by using an analog to digital (A/D) converter (not shown) built into it. In case of a digital audio input of any format, the audio input circuitry 409 allows it to pass through without any processing.

Regardless of the format of the input audio signals, the audio input is made available at the output with the received audio input characteristics as one of the outputs of the VPS 405, at the audio output 415. In addition, the received audio input signal without any processing, is made available as an output to a storage device for the purpose of permanent storage. The received audio input signal is made available for the storage device via a audio storage interface 417.

The audio transcoder circuitry 411 receives digital audio signal from the audio input circuitry 409, and decodes it to remove any audio compression. Then, the audio transcoder circuitry 411 encodes the audio signal into one of the multiple formats such as mono, stereo or multi-channel surround sound audio signals. The format of each of the output channels of the audio transcoder circuitry 411 correspond to the respective video channel of the video transcoder circuitry 311 (of **FIG. 3**). The interface control circuitry 407 (same as the interface control circuitry 307 of **FIG. 3**) provides control input to the audio transcoder circuitry 411, which decides the format of the audio output.

The digital audio output of the audio transcoder circuitry 411 is segregated to multiple channels, each having a characteristic as determined by the interface control circuitry 407, by the audio output circuitry 413. These multiple audio outputs are transmitted wirelessly in the operational region by the audio out circuitry 413. Alternatively, the audio signals are provided as outputs via audio jacks at the audio output 415.

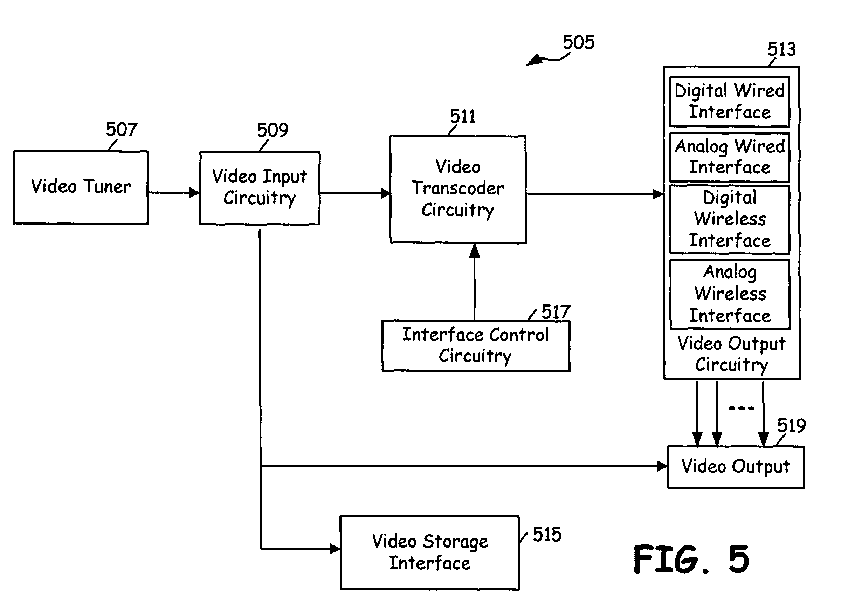

**FIG. 5** is a block diagram 505 illustrating the circuitry involved in the video processing portion of a set top box (STB) that incorporates video processing system (VPS), in accordance with the present invention. The set top box 113 (of **FIG. 1**) is operable to receive multiple inputs from various sources and produce a plurality of output video signals based upon an input video signal that is specifically suited for each recipient video system and the **FIG. 5** illustrates circuitry involved in the video processing portion of the STB 113 (of **FIG. 1**). The circuitry 505 demonstrates circuitry involved for only one of the multiple inputs of the STB 113 (of **FIG. 1**). The video processing portion 505 of the STB 113 (of **FIG. 1**) circuitry comprises of a video tuner 507, a video input circuitry 509, a video transcoder circuitry 511, a interface control circuitry 517, a video storage interface 515, a video output 519 and a video output circuitry 513.

The video tuner 507 receives video input signals from an analog or digital television radio frequency (RF) spectrum at the input of the STB 113 (of **FIG. 1**) and extracts video signals from the user defined television channel. This video signal is fed to video input circuitry 509. Alternatively, the video input circuitry 509 may receive signals from PVR 131, video player 129, television 121, computer 123, an external video source 115 (shown in **FIG. 1**) and other local and remote sources. In the case of an analog signal being fed to the video input circuitry 509, the analog to digital (A/D) converter (not shown) built into the video input circuitry 509 converts the analog video to a digital form. Irrespective of whether the transcoding is done upstream by the video source 115 (of **FIG. 1**) or any other local and remote source, the video input is made available at the output in the received format as one of the outputs of the STB 505, at the video output 519. In addition, the received input signal without any processing, is made available as an output to a storage device for the purpose of permanent storage. The received input signal is made available for the storage device via a video storage interface 515.

Typically, video information is transmitted by encoding it for video compression to save bandwidth. The video transcoder circuitry 511 is a process intensive circuitry capable of decoding the incoming video signal received from the video input circuitry 509, for decompression. The video transcoding circuitry 511 handles decompressed video signal on a frame-by-frame basis. Once the video information on frame-by-frame basis is extracted, the video transcoder circuitry 511 processes the video signal, by using a digital signal-processing algorithm, to encode again into a standard video format or a user defined video format. Then, the video transcoder circuitry 511 encodes the decoded video signals in to a plurality of video formats defined by the user. In effect, the video transcoder circuitry simultaneously translates input video signal into plurality of video formats, each format having unique screen resolution, frame and refresh rates. The video transcoder circuitry 511 decimates the input video signal when it is necessary to produce an output video signal having lesser resolution, similarly, when it is required to output a higher resolution video signal, the video transcoder circuitry 511 interpolates the input video signals.

The interface control circuitry 517 provides user input to the video transcoder 511.
Alternatively, the interface control circuitry 511 queries video devices in the operational region and decides on the video format required for each of the multiple outputs. The video transcoder circuitry 511 and the video output circuitry 513 use control input from the interface control circuitry 517 and format the video output accordingly.

The video output circuitry 513 receives input from the video transcoder circuitry 511, segregates the video output into plurality of channels, and transmits them wirelessly in the operational region or sends them via wires, based upon the user input from the interface control circuitry 517. The video output circuitry 513 converts digital video signals to analog format when an analog output is required based upon control input from the interface control circuitry 517. The video output circuitry 513 further comprises of digital wired interface, analog wired interface, digital wireless interface and analog wireless interface. The digital wired interface and the digital wireless interface allow the segregated digital video output to be transmitted via wires or wirelessly. Similarly, the analog wired interface and the analog wireless interface allow analog video output to be channeled to the recipient analog video systems, via wires or wirelessly. All channels of the video output, both analog and digital, are made available at the video output 519 via composite jacks.

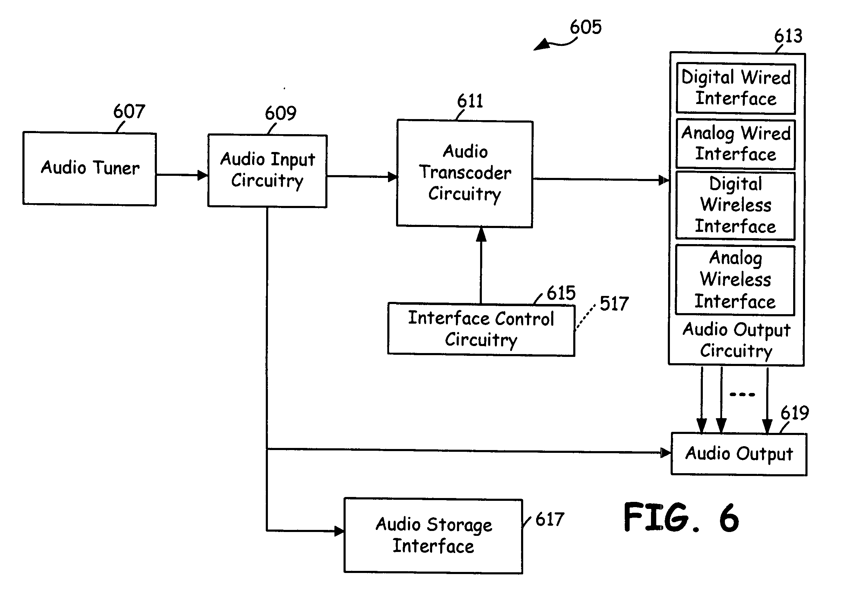

**FIG. 6** is a block diagram illustrating the circuitry involved in the audio component of a set top box (STB) that incorporates video processing system (VPS). The video portion circuitry shown in **FIG. 5** together with the audio portion circuitry shown in **FIG. 6** form the circuitry of the STB 113 (of **FIG. 1**), according to the present invention. The audio portion 605 of the STB 113 (of **FIG. 1**) comprises of an audio tuner 607, an audio input circuitry 609, an audio transcoder circuitry 611, an interface control circuitry 615, an audio storage interface 617, an audio output circuitry 613 and an audio output 619.

The radio frequency (RF) broadcast audio signal that arrive at the STB 113 (of **FIG. 1**) is fed to the audio tuner 607 and the output of the audio tuner 607 is sent to the audio input circuitry 609. The audio input circuitry 609 may also receive audio input from various other sources such as PVR 131, television 121, computer 123, an external video source 115 (shown in **FIG. 1**), and other local and remote sources. If the received audio input is of analog form, the analog to digital (A/D) converter (not shown) converts audio signals to a digital form.

The audio input from the video source 115 (of **FIG. 1**) or any other local and remote source is provided as an output with the received characteristics at the audio output 619. In addition, the received audio input is provided, via an audio storage interface 617, to an external storage device.

The audio transcoder circuitry 611 receives digital audio signal from the audio input circuitry 609, and decodes it to remove any audio compression. Further, the audio transcoder circuitry 611 encodes the audio signal into one of the multiple formats such as mono, stereo or multi-channel surround sound audio signals based upon the control signal from the interface control circuitry 615 (same as block 517 of **FIG. 5**). The format of each of the output channels of the audio transcoder circuitry 611 and the format of the respective video output channels of the video transcoder circuitry 511 (of **FIG. 5**) are paired together as an audio/video output for a corresponding recipient video system.

The digital audio output of the audio transcoder circuitry 611 is segregated to multiple channels, each having a characteristic as determined by the interface control circuitry 615, by the audio output circuitry 613. The audio output circuitry further comprises of a digital wired interface, a digital wireless interface, an analog wired interface and an analog wireless interface. The digital and analog wireless interfaces facilitate wireless transmission of audio output signals to the respective recipient video systems. Alternatively, the digital and analog wired interfaces of the output audio circuitry 613 provide the audio signals as outputs via audio jacks at the audio output 619.

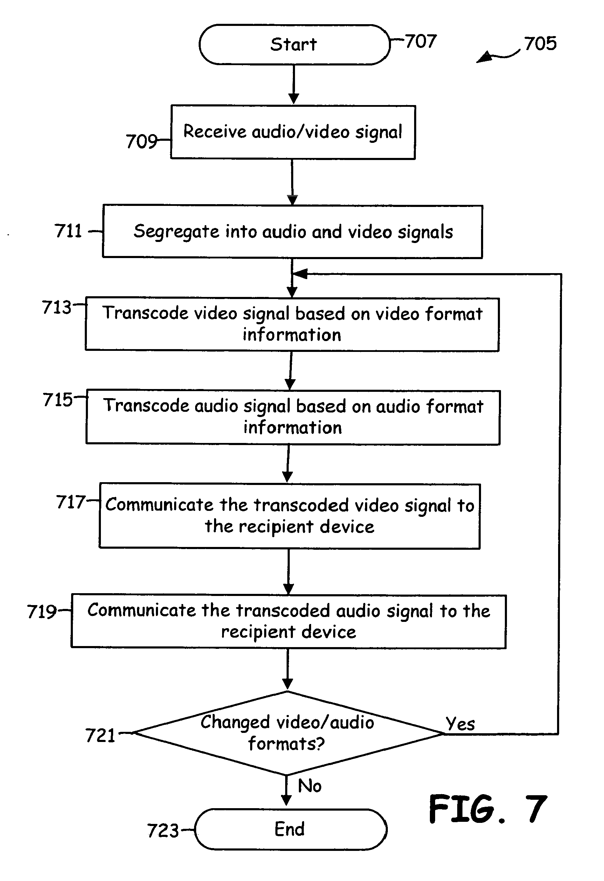

**FIG. 7** is a flow diagram 705 illustrating the method involved in video processing system (VPS) receiving audio/video content, separately transcoding audio and video contents based upon the format specifications of the recipient display system, according to the present invention. The method of video processing system (VPS) transcoding the audio/video input to a different audio/video format starts at the block 707. At the block 709, the VPS receives digital audio/video signals from a local or a remote source.

Then, at the next block 711, the VPS segregates the audio/video input into an audio stream and a video stream, to be processed separately. Then, at the next block 713, the VPS transcodes video signals based upon the video format information. The video format information is obtained from the user, which may include the screen resolution, frame, and refresh rates for video signals. The video format information may comply with any of the video standard formats (such as a HDTV format or a QVGA format) or may be unique to a particular recipient device. At the next block 715, the VPS transcodes audio signals based upon the audio format information. Again, the audio format that corresponds to a certain video system is obtained from the user that may include one of mono, stereo or surround sound audio formats. Alternatively, the VPS may query the recipient video system and obtain the audio and video format information.

Then, at the next block 717, the transcoded video signals are communicated to the recipient device. At the block 719, the corresponding transcoded audio signals are communicated to the recipient device. The recipient device is typically a video system. The communication may take place via a wired means (such as a local area network - LAN) or wirelessly. The wireless communication takes place using a standard radio frequency (RF) such as that of a Bluetooth (2.4 GHz). The wireless communication range (operational range of the VPS) may be about 100 meters. If the recipient device is not equipped with wireless communication facility, it may require a wireless dongle, that is, a small wireless receiver to be plugged into the audio/video input jacks.

Then, at the next decision block 721, the user definition of the audio/video formats from the user is verified for any changes. If there is a change in either user defined audio/video formats, the steps of 713, 715, 717, and 719 are repeated. If not, the transcoding procedure ends at the block 723. The entire process of 705 is repeated to produce a plurality of output video formats from multiple video inputs.

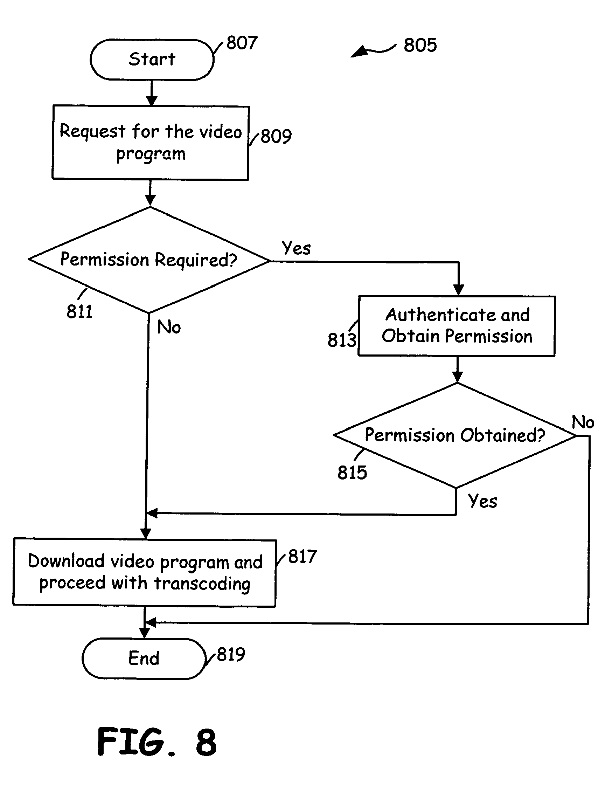

**FIG. 8** is a flow chart 805 illustrating the method used in downloading the pre-recorded audio/video program on a pay-per-view basis. The flow chart 805 exemplifies the process of downloading the pre-recorded audio/video program from the Internet and process (transcode) it to multiple output audio/video formats.

The processes of obtaining the permitted pre-recorded audio/video program starts at block 807. Then, at the next block 809, the user requests for a pre-recorded video program. For this, the user logs on to a website of choice in the Internet using a web browser and selects the desired programs from a list provided by the pre-recorded audio/video program provider. Then, the user requests to download these programs by clicking with the mouse on the respective buttons.

Then, at the next decision block 811, the website decides whether there is a requirement of permission to the programs selected. If yes, at the next block 813, the user provides all the authentication and billing information, such as name, address and the paying methods, to the pre-recorded audio/video program provider through the website pages. For making payments for the user permits for the video programs, the user needs to provide all the necessary information through the pre-recorded audio/video program provider's website. If, at the block 811, it is decided that there is no need for permission to transcode the pre-recorded audio/video program with the locally generated audio contents, the process jumps to the next block 817.

Then, at the next decision block 815, a decision is taken regarding whether the user has obtained permission. If the user has not given all the necessary information for billing or does not make payment, the process of downloading ends at the block 819.

If at the decision block 815, user provides all the necessary information and makes payment, the user is allowed to download the pre-recorded audio/video program. Then, the process of downloading ends at the block 819.

As one of average skill in the art will appreciate, the term "communicatively coupled", as may be used herein, includes wireless and wired, direct coupling and indirect coupling via another component, element, circuit, or module. As one of average skill in the art will also appreciate, inferred coupling (i.e., where one element is coupled to another element by inference) includes wireless and wired, direct and indirect coupling between two elements in the same manner as "communicatively coupled".

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims

## Claims

1. A video processing system operable to receive an input video signal having input video characteristics and to produce a plurality of output video signals, the video processing system comprising:
video input circuitry operable to receive the input video signal;
interface control circuitry operable to receive video format information regarding a plurality of video devices that communicatively couple to the video processing system;
video transcoder circuitry operable to transcode the input video signal based upon the video format information to produce the plurality of output video signals, each output video signal having a respective video format and corresponding to at least one respective video device of the plurality of video devices; and
video output circuitry operable to communicatively output the plurality of output video signals to the plurality of video devices.

2. The video processing system of claim 1, further comprising:
audio input circuitry operable to receive an input audio signal corresponding to the input video signal;
audio transcoder circuitry operable to transcode the input audio signal based upon audio format information regarding the plurality of video devices to produce a plurality of output audio signals, each output audio signal having a respective audio format and corresponding to at least one respective video device of the plurality of video devices; and
audio output circuitry operable to communicatively output the plurality of output audio signals to the plurality of video devices.

3. The video processing system of claim 1, wherein the video output circuitry comprises at least one of a digital wired interface, an analog wired interface, a digital wireless interface, and an analog wireless interface.

4. The video processing system of claim 1, the video output circuitry further operable to deliver the input video signal having the input video characteristics to an additional video device.

5. A set top box that is operable to transcode video signals to produce a plurality of output video signals based upon an input video signal, the set top box comprising:
video input circuitry operable to receive a source signal;
a video tuner operable to process the source signal to produce an input video signal having an input video format;
interface control circuitry operable to receive video format information regarding a plurality of video devices that communicatively couple to the video processing system;
video transcoder circuitry operable to transcode the input video signal based upon the video format information to produce the plurality of output video signals, each output video signal having a respective video format and corresponding to at least one respective video device of the plurality of video devices; and
video output circuitry operable to communicatively output the plurality of output video signals to the plurality of video devices.

6. The set top box of claim 5, further comprising:
an audio tuner operable to receive an input audio signal corresponding to the input video signal;
audio transcoder circuitry operable to transcode the input audio signal based upon audio format information regarding the plurality of video devices to produce a plurality of output audio signals, each output audio signal having a respective audio format and corresponding to at least one respective video device of the plurality of video devices; and
audio output circuitry operable to communicatively output the plurality of output audio signals to the plurality of video devices.

7. The set top box of claim 5, wherein the video output circuitry comprises at least one of a digital wired interface, an analog wired interface, a digital wireless interface, and an analog wireless interface.

8. A method for processing audio/video information comprising:
receiving an audio/video signal;
segregating the audio/video signal into a audio signal and a video signal;
transcoding the video signal to produce a transcoded video signal output;
transcoding the audio signal to produce a transcoded audio signal; and
communicating the transcoded audio/video signals to a recipient display system.

9. The method of claim 8, wherein:
transcoding the video signal to produce a transcoded video signal includes translating the video signal to a user defined screen resolution, user defined refresh and frame rate; and
transcoding the audio signal to produce a transcoded audio signal output includes translating the audio signal to one of user defined mono, stereo or surround sound signals.

10. The method of claim 8, wherein communicating of the transcoded audio/video signals to a recipient display system comprises transmitting the transcoded audio/video signals to a receiving system wirelessly.
